# EUROPÄISCHE PATENTSCHRIFT

(11) **EP 4 331 337 B1**
(45) Veröffentlichungstag und Bekanntmachung des Hinweises auf die Patenterteilung: **02.12.2026**
(21) Anmeldenummer: 23187760.6
(22) Anmeldetag: 26.07.2023
(51) Int. Cl.: A01C 17/00

(54) **SCHLEUDERSTREUER UND VERFAHREN ZUM BETREIBEN EINES SCHLEUDERSTREUERS**
CENTRIFUGAL DISTRIBUTER AND METHOD FOR OPERATING A CENTRIFUGAL DISTRIBUTER
ÉPANDEUR CENTRIFUGE ET PROCÉDÉ DE FONCTIONNEMENT D'UN ÉPANDEUR CENTRIFUGE

(30) Priorität: 05.09.2022 DE 102022122451
(43) Veröffentlichungstag der Anmeldung: 06.03.2024
(73) Patentinhaber: HORSCH LEEB Application Systems SE & Co. KG, 94405 Landau a.d. Isar (DE)
(72) Erfinder: Zink, Florian, 94405 Landau an der Isar (DE)
(74) Vertreter: v. Bezold & Partner Patentanwälte - PartG mbB

(56) Entgegenhaltungen:
- EP-A1- 0 410 109
- EP-B1- 0 820 219
- EP-B1- 3 406 126
- DE-A1- 10 005 230
- DE-A1- 10 238 395
- DE-A1- 4 217 890

## Beschreibung

Die Erfindung betrifft einen Schleuderstreuer zum Ausbringen von Streugut. Die Erfindung betrifft zudem ein Verfahren zum Betreiben eines Schleuderstreuer.

In der Landwirtschaft werden für ein ertragreiches Wachstum von Kulturpflanzen und zugleich verbesserten Erntequalitäten, mitunter große Mengen an Streugütern wie bspw. Mineraldüngern ausgebracht. Eine optimale Verteilung der Streugüter ist jedoch nicht nur im Hinblick auf den mit den Streugütern verbundenen Kosten wichtig, sondern auch im Hinblick auf Umweltschäden bei falschem oder übermäßigem Einsatz dieser Streugüter.

Zur Verteilung der Streugüter werden u.a. Schleuderstreuer eingesetzt. Bei diesen Schleuderstreuern wird einer (in der Regel jedoch zwei) rotierenden Streuscheibe (z.B. auch Schleuderscheiben, Streuteller oder dergl. genannt) ein dosierter Massenstrom zugeführt, der anschließend durch die Rotation der Streuscheibe mit daran angebrachten Streuschaufeln, unter Erzeugung eines Streubildes ganzflächig auf einer landwirtschaftlichen Nutzfläche verteilt, d.h. ausgebracht wird.

Zur Erreichung eines gewünschten Streubildes, sind am Schleuderstreuer verschiedenste, auf das jeweilige Streugut abgestimmte Einstellungen vorzunehmen. In der Regel schwanken die Streuguteigenschaften und deren Streueigenschaften jedoch für verschiedene Streugüter sehr stark, so dass die Einstellungen für jedes Streugut einzeln vorgenommen werden müssen. Wobei aber die richtige Einstellung für das Streugut für eine Bedienperson mitunter nicht ohne weiteres möglich ist, bzw. nicht ohne weiteres erkennbar ist.

Eine ideale Ausbringung des Streugutes erfordert zudem eine exakte Bestimmung der je Flächeneinheit ausgebrachten Menge an Streugut, insbesondere eine exakte Bestimmung des vom Schleuderstreuer ausgebrachten Massenstrom an Streugut je Flächeneinheit.

Bei aus dem Stand der Technik bekannten Schleuderstreuern wird dieser Massenstrom anhand eines sich verändernden Drehmoment der Streuscheibe bestimmt, wobei hierfür ein repräsentatives Drehmoment wenigstens einer Welle in einem Antriebsstrang (z.B. Antriebsmotor, Motorwelle oder dergl.) der Streuscheibe sensorisch ermittelt wird und wobei anschließend anhand dieses Drehmoments der zu diesem Drehmoment dazugehörige Massenstrom anhand einer Massenstrom-Drehmoment-Kennlinie bestimmt wird. Ein derartiges System wurde aus dem Stand der Technik bspw. durch die EP 0 963 690 A1 bekannt. Weitere Systeme und Verfahren sind in DE 100 05 230 A1, DE 42 17 890 A1, EP 3 406 126 B1 und DE 102 38 395 A1 offenbart.

Die Erfassung des Drehmoments an einer Welle des Antriebsstranges erfordert jedoch die Verwendung entsprechender kostenintensiver Sensorik, um das Drehmoment jeweils ausreichend exakt erfassen zu können. Darüber hinaus bedarf eine derartige Ausführung des Schleuderstreuer die Verwendung eines Antriebsstranges, der in dessen Aufbau und Lage fixiert ist, wodurch wiederum die Einstellmöglichkeiten an verschiedenste Streugüter begrenzt sind.

Aufgabe der Erfindung ist es somit, die beschriebenen Nachteile des Standes der Technik zu beseitigen, insbesondere soll ein Schleuderstreuer geschaffen werden, mit dem eine flexible Einstellung auf verschiedenste Streugüter ermöglicht wird.

Diese Aufgaben werden gelöst durch einen Schleuderstreuer mit den Merkmalen des unabhängigen Anspruch 1, sowie durch ein Verfahren mit den Merkmalen des Verfahrensanspruch 15.

Vorteilhafte Ausführungsformen und Weiterbildungen der Erfindung sind in den Ansprüchen und der folgenden Beschreibung unter teilweiser Bezugnahme auf die Figuren offenbart.

Gemäß einem ersten Aspekt der Erfindung wird ein Schleuderstreuer (auch Düngerstreuer genannt) zum Ausbringen von Streugut bereitgestellt. Das Streugut kann zweckmäßig insbesondere körniges Material in Form eines Mineraldüngers sein.

Der Schleuderstreuer umfasst zumindest eine Rahmenkonstruktion, mit zumindest einem Vorratsbehälter zur Bevorratung des auszubringenden Streugutes. Der Vorratsbehälter kann hierbei bspw. Bestandteil der Rahmenkonstruktion sein, alternativ kann der Vorratsbehälter auch an der Rahmenkonstruktion angebaut sein. Der Vorratsbehälter umfasst zweckmäßig insbesondere eine Kammer zur Bevorratung des jeweils auszubringenden Streugutes, alternativ oder ergänzend könnte der Vorratsbehälter aber auch zwei oder mehr, insbesondere voneinander getrennte Kammern aufweisen, um somit bspw. zwei oder mehr unterschiedliche Streugüter bevorraten zu können.

Der Schleuderstreuer umfasst zudem zumindest zwei Streuscheiben, denen jeweils eine Dosiereinrichtung zugeordnet ist, wobei die Dosiereinrichtungen jeweils eingerichtet sind, dass bevorratete Streugut aus dem Vorratsbehälter durch eine Auslassöffnung in einstellbaren Mengen unter Erzeugung eines jeweiligen Materialstroms jeweils einer Streuscheibe zuzuführen.

Zum Antreiben der Streuscheiben umfasst der Schleuderstreuer zumindest zwei, mittels einer Steuereinrichtung steuerbare und/oder regelbare, Antriebseinrichtungen, die jeweils mit einer Streuscheibe wirktechnisch gekoppelt sind (z.B. antriebstechnisch gekoppelt sind) und eingerichtet sind, die jeweilige Streuscheibe mit einer veränderbaren Drehzahl anzutreiben.

Erfindungsgemäß umfasst der Schleuderstreuer zudem zumindest eine Sensoreinrichtung**,** die mit der Steuereinrichtung signalverbunden und/oder signalverbindbar ist und die zur Erfassung eines jeweiligen, durch den Massenstrom auf der jeweiligen Streuscheibe hervorgerufenen Lastmoment eingerichtet ist. Vorzugsweise können entsprechend der Anzahl an Streuscheiben zwei oder mehr, die Sensoreinrichtung bildende Sensoren vorgesehen sein.

Erfindungsgemäß ist vorgesehen, dass die Streuscheiben jeweils mittels einer Montagevorrichtung an der Rahmenkonstruktion gelagert sind. Wobei es erfindungsgemäß vorgesehen ist, dass die Sensoreinrichtung jeweils mit einer der Montagevorrichtungen wirktechnisch gekoppelt ist. Wobei eine wirktechnische Koppelung insbesondere eine Montage der Sensoreinrichtung an der Montagevorrichtung umfasst.

Vorzugsweise ist es möglich, dass die Streuscheiben jeweils mittels einer Montagevorrichtung an der Rahmenkonstruktion derartig gelagert sind, dass durch die Montagevorrichtung eine Lage der jeweiligen Streuscheibe gegenüber der Auslassöffnung veränderbar ist, vorzugsweise derartig, dass ein Aufgabepunkt des jeweiligen Materialstrom auf der jeweiligen Streuscheibe veränderbar ist.

Infolge der erfindungsgemäßen Verwendung von Montagevorrichtungen zur Lagerung und Montage der Streuscheiben an der Rahmenkonstruktion, wird somit ein wesentlich flexibler einstellbarer Schleuderstreuer geschaffen. Insbesondere kann durch das Verändern der Lage der jeweiligen Streuscheibe gegenüber der Auslassöffnung ein Aufgabepunkt des Streuguts auf die Streuscheibe derartig beeinflusst werden, dass ein jeweiliges Streubild noch exakter eingestellt werden kann und somit die Verteilung des Streuguts wesentlich genauer erfolgen kann.

Um die Verteilung des Streuguts mittels der Streuscheiben noch weiter zu verbessern, ist es gemäß einer bevorzugten Ausführungsvariante möglich, dass an diesen jeweils zumindest zwei Streuschaufeln angebracht sind, welche das Streugut bei einer Rotation der Streuscheibe jeweils entsprechend mitnehmen und entsprechend der, mittels der Antriebseinrichtungen erzeugten Drehzahl der Streuscheibe, entsprechend beschleunigen und unter Erzeugung einer Wurfgeschwindigkeit wegschleudern, wodurch das entsprechende Streubild erzeugt wird. Zur Beeinflussung des Streubild ist hierbei neben der Drehzahl auch die Lage des Aufgabepunkt gegenüber der Streuscheibe und den entsprechenden Streuschaufeln wichtig, da somit die Wurfgeschwindigkeit des Streuguts beeinflusst werden kann und wiederum anhand der Wurfgeschwindigkeit des Streuguts das Streubild und insbesondere die Arbeitsbreite beeinflusst werden kann.

Gemäß eine Weiterbildung der Erfindung wäre es zudem wiederum denkbar, dass eine Lage der Streuschaufeln auf den Streuscheiben verstellbar ist.

Zur Erreichung eines Schleuderstreuer, mittels welchem eine noch flexiblere Anpassung an verschiedenste Streugüter erreicht wird, insbesondere mittels welchem eine Anpassung der Arbeitsbreite an verschiedenste Streugüter erreicht wird, ist es gemäß einer Weiterbildung der Erfindung möglich, dass die Streuscheiben mittels der Montagevorrichtung derartig an der Rahmenkonstruktion gelagert sind, dass ein Verändern der Lage der jeweiligen Streuscheibe mittels der Montagevorrichtung ein Verändern des jeweiligen Aufgabepunkt gegenüber der jeweiligen Auslassöffnung in zwei Richtungen hervorruft, insbesondere ein Verändern in X-Richtung und Y-Richtung eines Koordinatensystems, dessen Ursprung das Zentrum der Auslassöffnung ist, hervorruft. Ein Verändern der Lage kann hierbei in zwei Richtungen unabhängig voneinander erfolgen oder zwangsgeführt in zwei Richtungen erfolgen. Insbesondere ist es möglich, dass ein Verändern der Lage der jeweiligen Streuscheiben mittels der Montagevorrichtung nicht konzentrisch gegenüber der Auslassöffnung erfolgt.

Ein einfacher Aufbau des Schleuderstreuer kann gemäß einer Ausführungsvariante erreicht werden, indem die Montagevorrichtungen um aufrechte Achsen schwenkbar an der Rahmenkonstruktion gelagert sind, wobei eine Lage der jeweiligen Streuscheibe gegenüber der jeweiligen Auslassöffnung rotatorisch veränderbar ist. Wobei hierzu angemerkt sein, dass ein mittelbpunkt der Streuscheibe und die aufrechte Achse jeweils beabstandet zueinander sind.

Zur Erreichung eines möglichst großen Einstellbereichs ist es möglich, dass ein Schwenkwinkel der Montagevorrichtungen gegenüber der Rahmenkonstruktion wenigstens 135° oder wenigstens 90° oder wenigstens 45° beträgt. Der Schwenkwinkel umfasst hierbei insbesondere einen Schwenkbereich der Montagevorrichtung zwischen dessen jeweiligen Endlagen, d.h. ein Schwenkwinkel, respektive ein Schwenkbereich der Montagevorrichtung gegenüber der Rahmenkonstruktion beträgt somit wenigstens 135° oder wenigstens 90° oder wenigstens 45°.

Wobei wiederum ein Schwenkwinkel durch die Größe der jeweiligen Streuscheibe vorgegeben sein kann.

Insbesondere kann vorgesehen sein, dass der Schwenkwinkel eine derartige Größe aufweist, dass in einer Draufsicht die Auslassöffnung vollumfänglich freigelegt gegenüber der Streuscheibe ist, wodurch bspw. eine Restmengenentleerung des Vorratsbehälters vereinfacht werden kann.

Gemäß einer alternativen Ausführungsvariante des Schleuderstreuer kann vorgesehen sein, dass die Montagevorrichtungen verschiebbar gegenüber der Rahmenkonstruktion an der Rahmenkonstruktion gelagert sind, wobei das Verschieben der Streuscheiben quer zur Fahrtrichtung erfolgt und/oder in Fahrtrichtung oder entgegengesetzt zur Fahrtrichtung erfolgt und/oder in einem Schwenkwinkel zwischen 0° und 90° oder in einem Schwenkwinkel zwischen 25° und 75° gegenüber der Fahrtrichtung erfolgt. Insbesondere ist es somit möglich, dass das Verändern der Lage der jeweiligen Streuscheibe somit axial und/oder translatorisch erfolgt.

Eine Weiterbildung der Erfindung kann vorsehen, dass die Streuscheiben mittels der Montagevorrichtung derartig an der Rahmenkonstruktion gelagert sind, dass ein Verändern der Lage der jeweiligen Streuscheibe mittels der jeweiligen Montagevorrichtung unter Einhaltung eines zumindest im wesentlichen gleichbleibenden Höhenabstand zwischen der Streuscheibe und der Auslassöffnung erfolgt und/oder unter einem sich verändernden Höhenabstand zwischen der Streuscheibe und der Auslassöffnung erfolgt, wobei die Differenz der maximalen Höhenabstände maximal 25cm oder maximal 15cm beträgt. Wobei auch hierbei wiederum gelten kann, dass ein Verändern der Lage der Streuscheibe gegenüber der Auslassöffnung jeweils unter Berücksichtigung des Höhenabstand erfolgt.

Alternativ oder ergänzend ist es zweckmäßig vorzugsweise denkbar, dass die Streuscheiben mittels der Montagevorrichtung derartig an der Rahmenkonstruktion gelagert sind, dass ein Verändern der Lage der jeweiligen Streuscheibe mittels der jeweiligen Montagevorrichtung in zueinander entgegengesetzte Richtungen (z.B. links und rechts zur Fahrrichtung) erfolgt und/oder in zueinander laufende Richtungen (z.B. in Richtung der jeweiligen Mitte des Schleuderstreuer) erfolgt und/oder in sich schneidende Richtungen (z.B. links und rechts zur Fahrtrichtung und in Richtung der jeweiligen Mitte des Schleuderstreuer) erfolgt.

Der Schleuderstreuer kann gemäß einer Weiterbildung der Erfindung bevorzugt vorsehen, dass die Montagevorrichtungen mittels einer Schiebeführung (z.B. Linearführung, Linearantrieb und/oder dergl.) und/oder einer Parallelogrammlagerung und/oder einer Schwenklagerung an der Rahmenkonstruktion gelagert sind.

Die jeweiligen Positionen der Streuscheiben gegenüber der jeweiligen Auslassöffnungen können auf verschiedenste Art und Weise verstellbar sein, so ist es bspw. möglich, dass das Verändern der Lage der jeweiligen Streuscheibe gegenüber der jeweiligen Auslassöffnung mittels der jeweiligen Montagevorrichtung innerhalb einstellbarer oder vorgegebener Endlagepositionen erfolgt und/oder in einem festgelegten Positionsraster erfolgt und/oder stufenlos erfolgt.

Vorzugsweise ist es möglich, dass für das Verändern der Lage der Streuscheiben mittels der jeweiligen Montagevorrichtung, jede Montagevorrichtung mit einer, mit der Steuereinrichtung signalverbundenen und/oder signalverbindbaren Verstelleinrichtung wirktechnisch gekoppelt ist, wobei die Verstelleinrichtung insbesondere durch zumindest einen Linearantrieb und/oder einen Schwenkantrieb gebildet ist, und wobei die Verstelleinrichtung insbesondere fernbedienbar ausgebildet ist. Wobei eine fernbedienbarkeit bspw. eine Bedienung von einem Bedienerstand aus (z.B. Traktor) umfassen kann und bspw. mittels einer Bedieneinheit (z.B. Terminal, Steuergerät, oder dergl.) umfassen kann.

Die Dosiereinrichtungen können insbesondere derartig ausgeführt sein, dass diese jeweils als mittels zumindest eines Schiebers in deren Größe verstellbare Auslassöffnungen ausgebildet sind, wobei die Schieber der jeweiligen Dosiereinrichtungen unabhängig voneinander einstellbar sind. Alternativ könnten die Dosiereinrichtungen jedoch auch als Zellenradschleuse oder dergl. ausgebildet sein. Insbesondere sind die Dosiereinrichtungen derartig ausgebildet, dass mittels diesen eine Veränderbare Menge an Streugut aus dem Vorratsbehälter in Richtung der Streuscheibe fließen bzw. gefördert werden kann.

Um die Optionen zum exakten Einstellen des Schleuderstreuer noch weiter zu verbessern kann vorgesehen sein, dass die Dosiereinrichtung derartig ausgeführt ist, dass eine Relativposition der Auslassöffnung gegenüber dem Vorratsbehälter verstellbar ist. Somit kann bspw. die Lage der Auslassöffnung gegenüber dem Vorratsbehälter zusätzlich zu den Streuscheiben verstellbar sein und somit eine Lage des Aufgabepunkt noch exakter eingestellt werden.

Gemäß einer Weiterbildung der Erfindung kann vorgesehen sein, dass zwischen der Auslassöffnung und der Streuscheibe jeweils ein Düngemittelleitelement (z.B. Rutsche, Trichter oder dergl.) angeordnet ist, dessen der Streuscheibe zugewandte Seite über einen Hebelmechanismus in X-Richtung und Y-Richtung eines Koordinatensystems, dessen Ursprung das Zentrum der Auslassöffnung ist, veränderbar ist und/oder dessen der Streuscheibe zugewandte Seite einen veränderbaren Öffnungsquerschnitt aufweist, insbesondere einen in dessen Größe und/oder in dessen Kontur (z.B. rund, oval oder dergl.) veränderbaren Öffnungsquerschnitt aufweist. Durch ein derartiges Düngemittelleitelement kann zweckmäßig der Aufgabepunkt noch exakter eingestellt werden. Ebenso kann durch ein derartiges Düngemittelleitelement aber auch die jeweilige Form und Ausprägung des Aufgabepunkt auf der Streuscheibe verändert werden und an bspw. spezielle Streugüter angepasst werden.

Eine bevorzugte Ausführungsvariante des Schleuderstreuer kann vorsehen, dass die Antriebseinrichtungen jeweils durch zumindest einen Hydraulikmotor oder Elektromotor gebildet sind, der jeweils an der Montagevorrichtung montiert ist. Wobei auch ein mechanischer Antrieb, bspw. mittels eines Gelenkwellenantrieb denkbar wäre. Insbesondere ist erfindungsgemäß vorgesehen, dass die jeweiligen Antriebseinrichtungen unabhängig voneinander verstellbar sein können, d.h. dass die Drehzahlen der Streuscheiben unabhängig voneinander verstellbar sein können.

Zur Bestimmung der jeweils mittels der Dosiereinrichtung dosierten Menge an Streugut, d.h. zur Bestimmung der je Flächeneinheit ausgebrachten Menge an Streugut ist es gemäß der Erfindung vorgesehen, dass die Sensoreinrichtung eingerichtet ist, zur Erfassung eines jeweiligen, durch den Materialstrom auf der jeweiligen Streuscheibe hervorgerufenen Lastmoment, eine auf die Montagevorrichtung wirkende Kraft zu erfassen. Wobei es möglich ist, dass basierend auf der erfassten Kraft ein entsprechendes Lastmoment mittels der Steuereinrichtung und/oder der Sensoreinrichtung berechnet wird. Wobei alternativ oder ergänzend mittels der Sensoreinrichtung und/oder der Steuereinrichtung anhand des Lastmoment ein Massenstrom des Streugutes berechenbar ist.

Es kann zweckmäßig vorgesehen sein, dass die Erfassung der auf die Montagevorrichtung wirkenden Kraft zumindest eine auf die Lagerung der Montagevorrichtung an der Rahmenkonstruktion wirkende Kraft (z.B. eine Kraft auf die Aufrechte Achse) umfasst und/oder eine auf eine Verbindungseinrichtung der Montagevorrichtung mit der Verstelleinrichtung der Montagevorrichtung wirkende Kraft umfasst und/oder eine auf die Verstelleinrichtung wirkende Kraft umfasst. Es kann aber auch an anderen Teilen der Montagevorrichtung, die entsprechend dazu geeignet sind eine Kraft erfasst werden.

Zur verbesserten Erfassung der dosierten Menge an Streugut umfasst der Schleuderstreuer gemäß einer Weiterbildung eine, mit der Steuereinrichtung signalverbundene und/oder signalverbindbare Messeinrichtung die eingerichtet ist, eine Lage (z.B. Abstand in X-Richtung und/oder Y-Richtung und/oder Höhenabstand) der jeweiligen Streuscheibe gegenüber der jeweiligen Auslassöffnung mittelbar und/oder unmittelbar zu erfassen, wobei die Steuereinrichtung dazu eingerichtet ist, hieraus das Lastmoment unter Berücksichtigung der erfassten Lage zu berechnen.

Der Schleuderstreuer kann ausgebildet sein, um diesen mit Streuscheiben mit verschiedenen Durchmessern bestücken zu können, um somit bspw. verschiedenste Arbeitsbreiten realisieren zu können, wobei es hierbei denkbar ist, dass in der Steuereinrichtung Durchmesser der Streuscheibe hinterlegt und/oder hinterlegbar sind und die Steuereinrichtung dazu eingerichtet ist, das Lastmoment anhand des Durchmessers der Streuscheibe zu berechnen. So können sich bspw. mittels der Sensoreinrichtung erfasste Kräfte basierend auf dem Durchmesser der Streuscheiben ändern, wobei dies entsprechend wiederum mittels der Steuereinrichtung berücksichtigt werden kann.

Eine Weiterbildung des Schleuderstreuer kann vorsehen, dass der Vorratsbehälter mit einer Füllstandserfassungseinrichtung (z.B. Wiegeeinrichtung, Füllstandssensor und/oder dergl.) gekoppelt ist, die eingerichtet ist, einen sich verändernden Füllstand des Vorratsbehälters zur erfassen, wobei die Steuereinrichtung dazu eingerichtet ist, die Lage der Streuscheibe und/oder die Drehzahl der Streuscheibe und/oder die Menge an mittels der Dosiereinrichtung dosierten Streugut anhand des sich verändernden Füllstand zu verändern.

Eine Weiterbildung des Schleuderstreuer kann vorsehen, dass die Steuereinrichtung dazu eingerichtet ist, die Lage der Streuscheibe und/oder die Drehzahl der Streuscheibe und/oder die Menge an mittels der Dosiereinrichtung dosierten Streugut anhand des Lastmoment zu verändern.

Eine Weiterbildung des Schleuderstreuer kann vorsehen, dass die Steuereinrichtung eingerichtet ist, die Lage der Streuscheibe und/oder die Menge an mittels der Dosiereinrichtung dosierten Streugut anhand der Drehzahl der Streuscheiben zu verändern.

Eine Weiterbildung des Schleuderstreuer kann vorsehen, dass die Steuereinrichtung eingerichtet ist, eine Vorgabe einer Arbeitsbreite zu verarbeiten und anhand der Vorgabe der Arbeitsbreite die Lage der Streuscheibe und/oder die Drehzahl der Streuscheibe und/oder die Menge an mittels der Dosiereinrichtung dosierten Streugut zu verändern.

Eine Weiterbildung des Schleuderstreuer kann vorsehen, dass die Steuereinrichtung eingerichtet ist, eine Menge an Streugut je Flächeneinheit zu verarbeiten und anhand einer Vorgabe der Menge an Streugut je Flächeneinheit die Lage der Streuscheibe und/oder die Drehzahl der Streuscheibe und/oder die Menge an mittels der Dosiereinrichtung dosierten Streugut zu verändern.

Eine Weiterbildung des Schleuderstreuer kann vorsehen, dass eine Erfassungseinrichtung vorgesehen ist, die eingerichtet ist, ein mittels der Streuscheiben erzeugtes Streubild (z.B. Größe und/oder Ausprägung des Streubild) mittelbar oder unmittelbar zu erfassen und dass die Steuereinrichtung eingerichtet ist, die Lage der Streuscheibe und/oder die Drehzahl der Streuscheibe und/oder die Menge an mittels der Dosiereinrichtung dosierten Streugut anhand des erfassten Streubild zu verändern.

Eine Weiterbildung des Schleuderstreuer kann vorsehen, dass eine Geschwindigkeitsmesseinrichtung vorgesehen ist, die eingerichtet ist, eine Geschwindigkeit mit welcher der Schleuderstreuer entlang der Ackerfläche bewegt wird zu erfassen und dass die Steuereinrichtung eingerichtet ist, die Lage der Streuscheibe und/oder die Drehzahl der Streuscheibe und/oder die Menge an mittels der Dosiereinrichtung dosierten Streugut anhand der Geschwindigkeit zu verändern, insbesondere anhand einer sich verändernden Geschwindigkeit (d.h. Beschleunigung, Verzögerung, gleichbleibend) zu erhöhen oder zu verringern.

Die Steuereinrichtung weist bspw. eine Rechnereinheit, einen Bordcomputer und/oder dergl. auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Im Kontext der Erfindung umfasst der Begriff der Steuereinrichtung, insbesondere die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren oder Sensoreinheiten oder Sensoranordnungen integrierte Steuereinrichtungen. Ebenso sei darauf hingewiesen, dass die Signale und/oder Daten der Sensoren / Messeinrichtungen / Erfassungseinrichtungen und/oder dergl. jeweils als Rückkoppelung für eine Steuer- und/oder Regelgröße herangezogen werden können.

Es sei noch darauf hingewiesen, dass die Begriffe "Steuern" und "Regeln" und "Steuereinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Gemäß einem weiteren Aspekt der Erfindung wird ein Verfahren zum Betreiben eines Schleuderstreuer bereitgestellt.

Das Verfahren umfasst zumindest ein Bereitstellen einer Rahmenkonstruktion, mit zumindest einem Vorratsbehälter zur Bevorratung des auszubringenden Streuguts sowie ein Bereitstellen von zwei Streuscheiben, denen jeweils eine Dosiereinrichtung zugeordnet ist, wobei die Dosiereinrichtungen jeweils eingerichtet sind, dass bevorratete Streugut aus dem Vorratsbehälter durch eine Auslassöffnung in einstellbaren Mengen unter Erzeugung eines jeweiligen Materialstrom jeweils einer Streuscheibe zuzuführen, wobei die Streuscheiben jeweils mittels einer Montagevorrichtung an der Rahmenkonstruktion gelagert sind und deren Lage gegenüber der jeweiligen Auslassöffnung veränderbar ist.

Zudem umfasst das Verfahren ein Bereitstellen von zwei, mittels einer Steuereinrichtung steuerbaren und/oder regelbaren Antriebseinrichtungen, die jeweils mit einer Streuscheibe wirktechnisch gekoppelt sind und eingerichtet sind, die jeweilige Streuscheibe mit veränderbarer Drehzahl anzutreiben.

Darüber hinaus umfasst das Verfahren ein Bereitstellen einer Sensoreinrichtung, die mit der Steuereinrichtung signalverbunden und/oder signalverbindbar ist und die zur Erfassung eines jeweiligen, durch den Materialstrom auf der jeweiligen Streuscheibe hervorgerufenen Lastmoment eingerichtet ist, wobei die Sensoreinrichtung jeweils mit einer Montagevorrichtung wirktechnisch gekoppelt ist.

Vorzugsweise umfasst das Verfahren insbesondere eine Anpassung der Arbeitsbreite des Schleuderstreuer anhand eines derartigen Veränderns der jeweiligen Lage der jeweiligen Streuscheibe gegenüber der jeweiligen Auslassöffnung, dass der Aufgabepunkt des jeweiligen Materialstrom auf der jeweiligen Streuscheibe verändert wird.

Das erfindungsgemäße Verfahren umfasst ein derartiges Verändern der jeweiligen Lage der jeweiligen Streuscheibe gegenüber der jeweiligen Auslassöffnung und/oder der Drehzahl der jeweiligen Streuscheibe und/oder der Menge an jeweils mittels der Dosiereinrichtung dosiertem Streugut mittels der Steuereinrichtung, dass das jeweilige Lastmoment einen Maximalwert nicht überschreitet.

Das Verfahren ist insbesondere mit einem Schleuderstreuer nach einem der vorherigen Ausführungsbeispiele ausführbar.

Hinsichtlich der Vorteile und Ausführungsformen des erfindungsgemäßen Verfahrens wird auch auf die Vorteile und Ausführungsformen des erfindungsgemäßen Schleuderstreuer verwiesen.

Zur Vermeidung von Wiederholungen sei darauf hingewiesen, dass die erfindungsgemäßen Ausführungsformen und Merkmale in beliebiger Weise und Frei mit dem Schleuderstreuer und/oder dem Verfahren kombinierbar sind. Dementsprechend sind alle Ausführungsformen und erfindungsgemäßen Merkmale sowohl für den Schleuderstreuer als auch für das Verfahren offenbart und beanspruchbar.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1A: eine Perspektivansicht einer Ausführungsvariante eines erfindungsgemäßen Schleuderstreuer,
- Figur 1B: eine alternative Perspektivansicht des Schleuderstreuer gemäß Figur 1A,
- Figur 1C: eine Perspektivansicht von hinten des Schleuderstreuer gemäß der Figur 1A,
- Figur 1D: eine Perspektivansicht einer Streuscheibe in einer ersten Schwenklage, welche mittels einer Montagevorrichtung an der Rahmenkonstruktion des Schleuderstreuer gemäß Figur 1A montiert ist,
- Figur 1E: eine Perspektivansicht einer Streuscheibe in einer, gegenüber der Figur 1D, alternativen Schwenklage,
- Figur 1F: eine Draufsicht auf eine Streuscheibe in einer, gegenüber der Figur 1D alternativen Schwenklage,
- Figur 2A: eine Prinzipdarstellung einer einzelnen Streuscheibe, die mit einer Schwenkbar an der Rahmenkonstruktion gelagerten Montagevorrichtung in deren Lage gegenüber einer Auslassöffnung veränderbar ist,
- Figur 2B: eine Prinzipdarstellung einer einzelnen Streuscheibe, die mit einer Verschiebbar an der Rahmenkonstruktion gelagerten Montagevorrichtung in deren Lage gegenüber einer Auslassöffnung veränderbar ist,
- Figur 2C: eine Prinzipdarstellung einer einzelnen Streuscheibe, die mit einer, mittels eines Parallelogramms schwenkbar an Rahmenkonstruktion gelagerten, Montagevorrichtung in deren Lage gegenüber einer Auslassöffnung veränderbar ist.

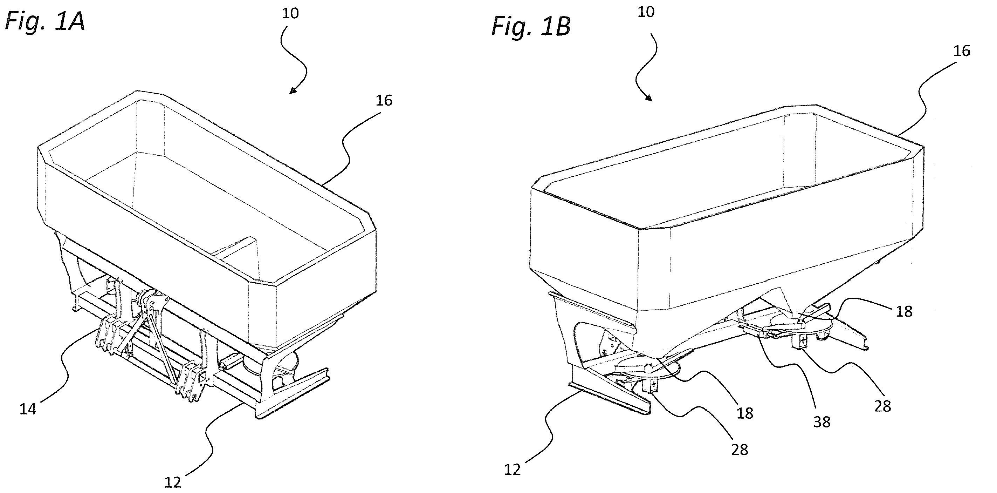

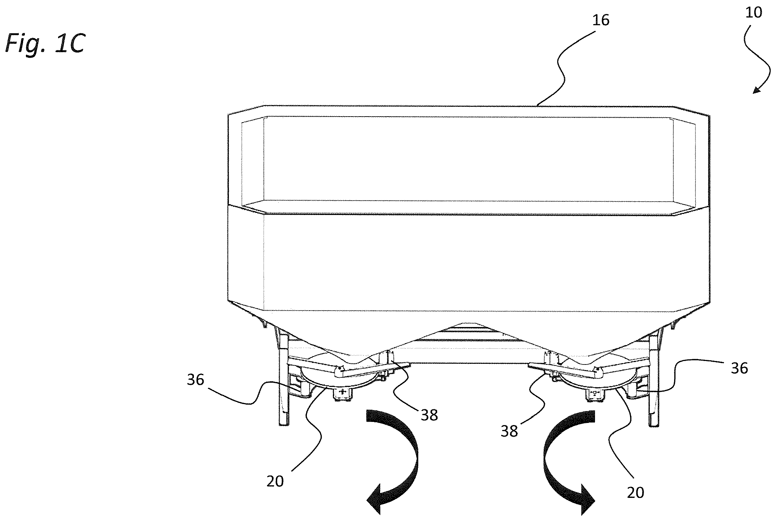

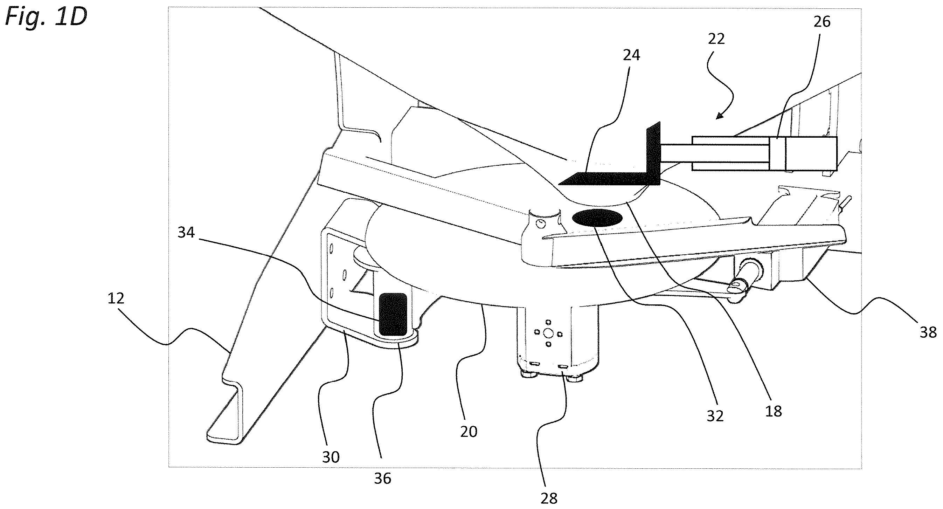

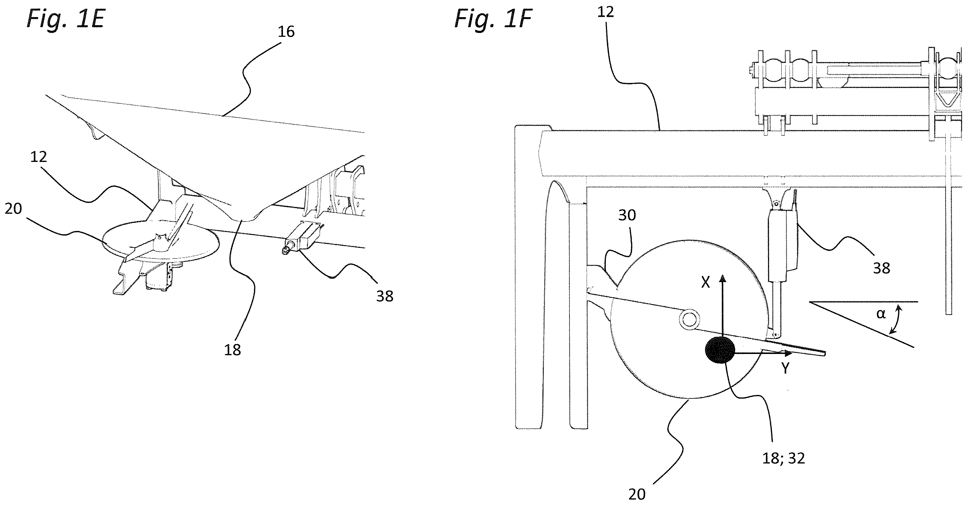

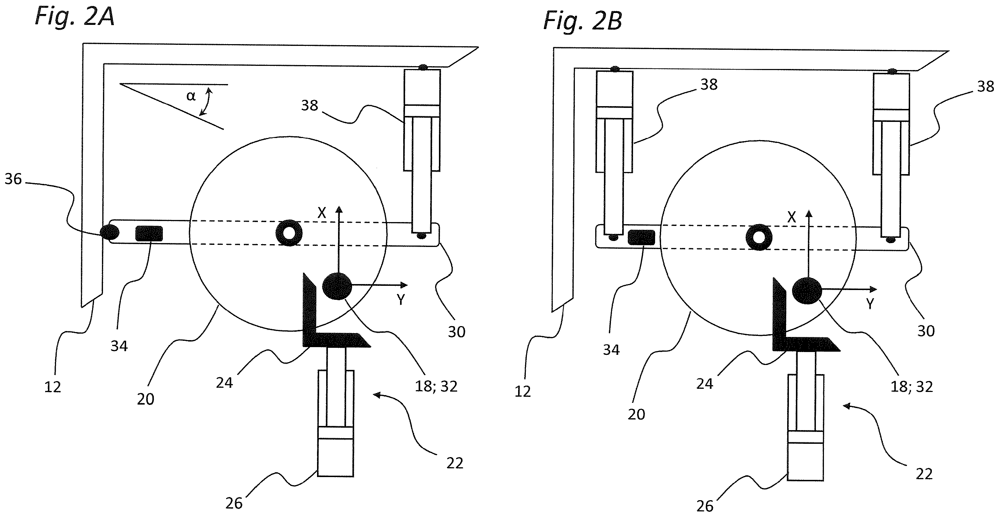

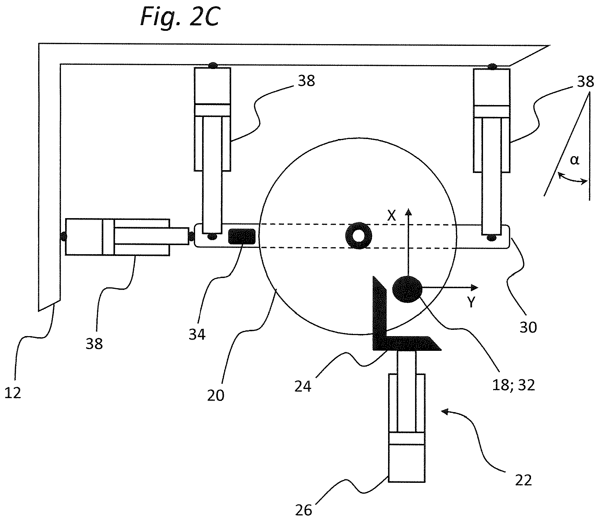

Die in den Figuren 1 und 2 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Ein Ausführungsbeispiel eines Schleuderstreuer 10 geht aus den Figuren 1A bis 1F hervor. Der Schleuderstreuer 10 dient zur Verteilung von Streugütern wie bspw. Dünger, Saatgut und/oder dergl. welche Streugüter insbesondere als granulare Streugüter ausgeführt sind.

Der Schleuderstreuer 10 ist insbesondere eingerichtet ein Verfahren wie in diesem Dokument beschrieben auszuführen, d.h. ein Verfahren nach einem der vorgenannten Ausführungsbeispiele auszuführen.

Der Schleuderstreuer 10 umfasst eine Rahmenkonstruktion 12 mit einer Anhängevorrichtung 14 in Form einer sog. Dreipunkt-Anhängung zur Koppelung des Schleuderstreuer 10 an einem (hier nicht dargestellten) Zugfahrzeug (z.B. Traktor).

An der Rahmenkonstruktion 12 ist ein Vorratsbehälter 16 zur Bevorratung des auszubringenden Streugutes angebaut. Der Vorratsbehälter 16 weist eine Kammer, zur Mitführung einer Streugutsorte auf, könnte jedoch auch zwei oder mehr Kammern zum Mitführen von zwei oder mehr Streugutsorten aufweisen.

Der Vorratsbehälter 16 verjüngt sich nach unten hin trichterförmig und weist zwei Auslassöffnungen 18 auf. Wobei unterhalb der Auslassöffnungen 18 zwei Streuscheiben 20 angeordnet sind, denen jeweils eine Dosiereinrichtung 22 zugeordnet ist (siehe Figur 1D). Es sei angemerkt, dass der Übersichthalber nur eine Dosiereinrichtung 22 in einer Prinzipdarstellung in der Figur 1D dargestellt ist. Die Dosiereinrichtung 22 kann erfindungsgemäß zweckmäßig in einer an sich bekannten Weise ausgeführt sein und bspw. als ein Schiebersystem mit einem, mittels eines Stellantriebes 26 verstellbarem Schieber 24 ausgeführt sein, das heißt dass die Dosiereinrichtungen 22 bspw. als mittels zumindest eines Schiebers 24 in deren Größe verstellbare Auslassöffnungen 18 ausgebildet sein können. Die Dosiereinrichtung 22 ist zweckmäßig insbesondere eingerichtet, dass bevorratete Streugut aus dem Vorratsbehälter 16 durch die Auslassöffnung 18 in einstellbaren Mengen unter Erzeugung eines jeweiligen Materialstroms jeweils einer Streuscheibe 20 zuzuführen. Wobei die Dosiereinrichtungen 22 jeweils unabhängig voneinander verstellbar sein können.

Der Schleudersteuer 10 umfasst zudem zwei, mittels einer Steuereinrichtung steuerbare und/oder regelbare, Antriebseinrichtungen 28, die jeweils mit einer Streuscheibe 20 wirktechnisch gekoppelt sind und eingerichtet sind, die jeweilige Streuscheibe 20 mit einer veränderbaren Drehzahl anzutreiben.

Um die Verteilung des Streuguts mittels der Streuscheiben 20 zu verbessern, sind an diesen jeweils zwei Streuschaufeln angebracht, welche das Streugut bei einer Rotation der Streuscheibe 20 jeweils entsprechend mitnehmen und entsprechend der, mittels der Antriebseinrichtungen 28 erzeugten Drehzahl der Streuscheibe 20, entsprechend beschleunigen und unter Erzeugung einer Wurfgeschwindigkeit wegschleudern, wodurch das entsprechende Streubild erzeugt wird. Zur Beeinflussung des Streubild ist hierbei neben der Drehzahl auch die Lage des Aufgabepunkt 32 gegenüber der Streuscheibe 20 und den entsprechenden Streuschaufeln wichtig, da somit die Wurfgeschwindigkeit des Streuguts beeinflusst werden kann und wiederum anhand der Wurfgeschwindigkeit des Streuguts das Streubild und insbesondere die Arbeitsbreite beeinflusst werden kann.

Die Streuscheiben 20 sind jeweils mittels einer Montagevorrichtung 30 an der Rahmenkonstruktion 12 derartig gelagert, dass durch die Montagevorrichtung 30 eine Lage der jeweiligen Streuscheibe gegenüber der Auslassöffnung 18 veränderbar ist, vorzugsweise derartig, dass ein Aufgabepunkt 32 (siehe Figur 1D) des jeweiligen Materialstrom auf der jeweiligen Streuscheibe 20 veränderbar ist, vergl. hierzu bspw. Figur 1D und 1F.

Wie insbesondere aus der Figur 1D hervorgeht, ist zudem eine Sensoreinrichtung 34 vorgesehen, welche mit einer Steuereinrichtung signalverbunden und/oder signalverbindbar ist und die zur Erfassung eines jeweiligen, durch den jeweiligen Materialstrom auf der jeweiligen Streuscheibe 20 hervorgerufenen Lastmoment eingerichtet ist, wobei die Sensoreinrichtung 34 zudem mit der Montagevorrichtung 30 gekoppelt ist, d.h. zweckmäßig bspw. an der Montagevorrichtung 30 angebracht ist.

Die Sensoreinrichtung 34 ist zweckmäßig eingerichtet, zur Erfassung eines jeweiligen, durch den Materialstrom auf der jeweiligen Streuscheibe 20 hervorgerufenen Lastmoment, eine auf die Montagevorrichtung 30 wirkende kraft zu erfassen. Gemäß der Figur 1D erfolgt eine Erfassung der auf die Montagevorrichtung 30 wirkenden Kraft durch eine Erfassung der auf die Lagerung der Montagevorrichtung 30 an der Rahmenkonstruktion 12 wirkenden Kraft.

Gemäß den Ausführungsbeispielen sind die Montagevorrichtungen 30 jeweils um aufrechte Achsen 36 schwenkbar an der Rahmenkonstruktion 12 gelagert, wodurch somit eine Lage der jeweiligen Streuscheibe 20 gegenüber der jeweiligen Auslassöffnung 18 rotatorisch veränderbar ist.

Insbesondere ist vorgesehen, dass die Streuscheiben 20 mittels der Montagevorrichtung derartig an der Rahmenkonstruktion 12 gelagert sind, dass ein Verändern der Lage der jeweiligen Streuscheibe 20 mittels der jeweiligen Montagevorrichtung 30 unter Einhaltung eines zumindest im wesentlichen gleichbleibenden Höhenabstand zwischen der Streuscheibe 20 und der Auslassöffnung 18 erfolgt. Wobei es auch möglich wäre, dass dies unter einem sich verändernden Höhenabstand zwischen der Streuscheibe 20 und der Auslassöffnung 18 erfolgt.

Wie mittels zwei Pfeilen in der Figur 1C angedeutet ist, sind die Streuscheiben 20 mittels der jeweiligen Montagevorrichtung 30 derartig an der Rahmenkonstruktion 12 gelagert, dass ein Verändern der Lage der jeweiligen Streuscheibe 20 mittels der jeweiligen Montagevorrichtung 30 in zueinander entgegengesetzte Richtungen erfolgt. Wobei es auch möglich wäre, dass dies in zueinander laufende Richtungen erfolgt und/oder in sich schneidende Richtungen erfolgt.

Das Verändern der Lage der Streuscheiben 20 mittels der Montagevorrichtung 30 erfolgt jeweils mittels einer, mit der Steuereinrichtung signalverbundenen und/oder signalverbindbaren Verstelleinrichtung 38, die entsprechend mit der Montagevorrichtung 30 wirktechnisch gekoppelt ist. Gemäß den Ausführungsbeispielen ist die Verstelleinrichtung 38 jeweils durch einen Linearantrieb gebildet. Könnte jedoch auch durch einen Schwenkantrieb oder dergl. gebildet sein. Die Verstelleinrichtung 38 ist zudem zweckmäßig jeweils fernbedienbar ausgebildet.

Insbesondere ist es möglich, dass das Verändern der Lage der jeweiligen Streuscheibe 20 gegenüber der jeweiligen Auslassöffnung 18 mittels der jeweiligen Montagevorrichtung 30 stufenlos erfolgt. Wobei auch eine Verstellung innerhalb einstellbarer oder vorgegebener Endlagepositionen und/oder in einem festgelegten Positionsraster denkbar wäre.

Wie aus der Figur 1E hervorgeht, ist es zweckmäßig möglich, dass die Streuscheiben 20 mittels der Montagevorrichtung 30 in einem Schwenkwinkel α gegenüber der Auslassöffnung 18 verschwenkbar sind, wobei der Schwenkwinkel α eine derartige Größe aufweisen kann, dass in einer Draufsicht die Auslassöffnung 18 vollumfänglich freigelegt gegenüber der Streuscheibe 20 ist, wodurch bspw. eine Restmengenentleerung des Vorratsbehälters 16 vereinfacht werden kann.

Aus den Figuren 2A bis 2C gehen jeweils Prinzipdarstellungen einer einzelnen Streuscheibe 20 hervor. Wobei gemäß der Figur 2A eine einzelne Streuscheibe 20 gezeigt ist, die mit einer schwenkbar an der Rahmenkonstruktion 12 gelagerten Montagevorrichtung 30 in deren Lage gegenüber einer Auslassöffnung 18 veränderbar ist.

Gemäß der Figur 2B ist zudem eine einzelne Streuscheibe 20 gezeigt, die mit einer verschiebbar an der Rahmenkonstruktion 12 gelagerten Montagevorrichtung 30 in deren Lage gegenüber einer Auslassöffnung 18 veränderbar ist. Wobei das Verschieben mittels zwei parallel nebeneinander an der Rahmenkonstruktion 12 gelagerten Verstelleinrichtungen 38 in Form von Linearantrieben erfolgt.

Gemäß der Figur 2C ist zudem eine einzelne Streuscheibe 20 gezeigt, die mit einer, mittels eines Parallelogramms schwenkbar an der Rahmenkonstruktion 12 gelagerten, Montagevorrichtung 30 in deren Lage gegenüber einer Auslassöffnung 18 veränderbar ist. Das Parallelogramm ist hierbei zudem durch zwei Verstelleinrichtungen 38 gebildet. Zudem ist das Parallelogramm mittels einer weiteren Verstelleinrichtung 38 in Y-Richtung verschwenkbar.

Insbesondere ist es möglich, dass die Streuscheiben 20 mittels der Montagevorrichtung 30 jeweils derartig an der Rahmenkonstruktion 12 gelagert sind, dass ein Verändern der Lage der jeweiligen Streuscheibe 20 mittels der Montagevorrichtung 30 ein Verändern des Aufgabepunkt 32 gegenüber der Auslassöffnungen 18 in zwei Richtungen hervorruft, insbesondere ein Verändern in X-Richtung und Y-Richtung eines Koordinatensystems, dessen Ursprung das Zentrum der Auslassöffnung 18 ist, hervorruft.

Es ist insbesondere denkbar, dass ein Schwenkwinkel α der Montagevorrichtung 30 gegenüber der Rahmenkonstruktion 12 wenigstens 135° oder wenigstens 90° oder wenigstens 45° beträgt

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste:

- 10: Schleuderstreuer
- 12: Rahmenkonstruktion
- 14: Anhängevorrichtung
- 16: Vorratsbehälter
- 18: Auslassöffnung
- 20: Streuscheibe
- 22: Dosiereinrichtung
- 24: Schieber
- 26: Stellantrieb
- 28: Antriebseinrichtung
- 30: Montagevorrichtung
- 32: Aufgabepunkt
- 34: Sensoreinrichtung
- 36: Aufrechte Achse
- 38: Verstelleinrichtung

- α: Schwenkwinkel

## Patentansprüche

1. Schleuderstreuer (10) zum Ausbringen von Streugut, umfassend zumindest,
- eine Rahmenkonstruktion (12), mit zumindest einem Vorratsbehälter (16) zur Bevorratung des auszubringenden Streugutes,
- zwei Streuscheiben (20), denen jeweils eine Dosiereinrichtung (22) zugeordnet ist, wobei die Dosiereinrichtungen (22) jeweils eingerichtet sind, dass bevorratete Streugut aus dem Vorratsbehälter (16) durch eine Auslassöffnung (18) in einstellbaren Mengen unter Erzeugung eines jeweiligen Materialstroms jeweils einer Streuscheibe (20) zuzuführen,
- zwei, mittels einer Steuereinrichtung steuerbare und/oder regelbare, Antriebseinrichtungen (28), die jeweils mit einer Streuscheibe (20) wirktechnisch gekoppelt sind und eingerichtet sind, die jeweilige Streuscheibe (20) mit einer veränderbaren Drehzahl anzutreiben,
- eine Sensoreinrichtung (34), die mit der Steuereinrichtung signalverbunden und/oder signalverbindbar ist und die zur Erfassung eines jeweiligen, durch den Materialstrom auf der jeweiligen Streuscheibe (20) hervorgerufenen Lastmoments eingerichtet ist,
wobei die Streuscheiben (20) jeweils mittels einer Montagevorrichtung (30) an der Rahmenkonstruktion (12) gelagert sind und die Sensoreinrichtung (34) jeweils mit einer Montagevorrichtung (30) wirktechnisch gekoppelt ist, und wobei die Sensoreinrichtung (34) eingerichtet ist, zur Erfassung eines jeweiligen, durch den Materialstrom auf der jeweiligen Streuscheibe (20) hervorgerufenen Lastmoments, eine auf die Montagevorrichtung (30) wirkende Kraft zu erfassen.

2. Schleuderstreuer (10) nach Anspruch 1, **dadurch gekennzeichnet, dass** die Streuscheiben (20) mittels der jeweiligen Montagevorrichtung (30) an der Rahmenkonstruktion (12) derartig gelagert sind, dass durch die Montagevorrichtung (30) eine Lage der jeweiligen Streuscheibe (20) gegenüber der Auslassöffnung (18) veränderbar ist, vorzugsweise derartig, dass ein Aufgabepunkt (32) des jeweiligen Materialstroms auf der jeweiligen Streuscheibe (20) veränderbar ist.

3. Schleuderstreuer (10) nach einem der Ansprüche 1 oder 2, **dadurch gekennzeichnet, dass** die Streuscheiben (20) mittels der Montagevorrichtung (30) derartig an der Rahmenkonstruktion (12) gelagert sind, dass ein Verändern der Lage der jeweiligen Streuscheibe (20) mittels der Montagevorrichtung (30) ein Verändern des jeweiligen Aufgabepunkts (32) gegenüber der jeweiligen Auslassöffnung (18) in zwei Richtungen hervorruft, insbesondere ein Verändern in X-Richtung und Y-Richtung eines Koordinatensystems, dessen Ursprung das Zentrum der Auslassöffnung (18) ist, hervorruft.

4. Schleuderstreuer (10) nach einem der vorherigen Ansprüche, **dadurch gekennzeichnet, dass** die Montagevorrichtungen (30) um aufrechte Achsen (36) schwenkbar an der Rahmenkonstruktion (12) gelagert sind, wobei eine Lage der jeweiligen Streuscheibe (20) gegenüber der jeweiligen Auslassöffnung (18) rotatorisch veränderbar ist.

5. Schleuderstreuer (10) nach einem der vorherigen Ansprüche, **dadurch gekennzeichnet, dass** zum Verändern der Lage der Streuscheiben (20) mittels der jeweiligen Montagevorrichtung (30), jede Montagevorrichtung (30) mit einer, mit der Steuereinrichtung signalverbundenen und/oder signalverbindbaren Verstelleinrichtung (38) wirktechnisch gekoppelt ist, wobei die Verstelleinrichtung (38) insbesondere durch zumindest einen Linearantrieb und/oder einen Schwenkantrieb gebildet ist, und wobei die Verstelleinrichtung (38) insbesondere fernbedienbar ausgebildet ist.

6. Schleuderstreuer (10) nach einem der vorherigen Ansprüche, **dadurch gekennzeichnet, dass** die Dosiereinrichtungen (22) jeweils als mittels zumindest eines Schiebers (24) in deren Größe verstellbare Auslassöffnungen (18) ausgebildet sind, wobei die Schieber (24) der jeweiligen Dosiereinrichtungen (22) unabhängig voneinander einstellbar sind.

7. Schleuderstreuer (10) nach einem der vorherigen Ansprüche, **dadurch gekennzeichnet, dass** die Erfassung der auf die Montagevorrichtung (30) wirkenden Kraft zumindest
- eine auf die Lagerung der Montagevorrichtung (30) an der Rahmenkonstruktion (12) wirkende Kraft umfasst und/oder
- eine auf eine Verbindungseinrichtung der Montagevorrichtung (30) mit einer Verstelleinrichtung (38) der Montagevorrichtung (30) wirkende Kraft umfasst und/oder
- eine auf eine Verstelleinrichtung (38) der Montagevorrichtung (30) wirkende Kraft umfasst.

8. Schleuderstreuer (10) nach einem der vorherigen Ansprüche, **gekennzeichnet durch** eine, mit der Steuereinrichtung signalverbundene und/oder signalverbindbare Messeinrichtung, die eingerichtet ist, eine Lage der jeweiligen Streuscheibe (20) gegenüber der jeweiligen Auslassöffnung (18) mittelbar und/oder unmittelbar zu erfassen, wobei die Steuereinrichtung dazu eingerichtet ist, hieraus das Lastmoment unter Berücksichtigung der erfassten Lage zu berechnen.

9. Schleuderstreuer (10) nach einem der vorherigen Ansprüche, **dadurch gekennzeichnet, dass** in der Steuereinrichtung ein Durchmesser der Streuscheibe (20) hinterlegt und/oder hinterlegbar ist und die Steuereinrichtung dazu eingerichtet ist, das Lastmoment anhand des Durchmessers der Streuscheibe (20) zu berechnen.

10. Schleudersteuer (10) nach einem der vorherigen Ansprüche, **dadurch gekennzeichnet, dass** der Vorratsbehälter (16) mit einer Füllstandserfassungseinrichtung gekoppelt ist, die eingerichtet ist, einen sich verändernden Füllstand des Vorratsbehälters (16) zu erfassen, wobei die Steuereinrichtung dazu eingerichtet ist, eine Lage der Streuscheibe (20) und/oder eine Drehzahl der Streuscheibe (20) und/oder eine Menge an mittels der Dosiereinrichtung (22) dosiertem Streugut anhand des sich verändernden Füllstands zu verändern.

11. Schleuderstreuer (10) nach einem der vorherigen Ansprüche, **dadurch gekennzeichnet, dass** die Steuereinrichtung dazu eingerichtet ist, eine Lage der Streuscheibe (20) und/oder eine Drehzahl der Streuscheibe (20) und/oder eine Menge an mittels der Dosiereinrichtung (22) dosiertem Streugut anhand des Lastmoments zu verändern.

12. Schleuderstreuer (10) nach einem der vorherigen Ansprüche, **dadurch gekennzeichnet, dass** die Steuereinrichtung eingerichtet ist, eine Lage der Streuscheibe (20) und/oder eine Menge an mittels der Dosiereinrichtung (22) dosiertem Streugut anhand der Drehzahl der Streuscheiben (20) zu verändern.

13. Schleuderstreuer (10) nach einem der vorherigen Ansprüche, **dadurch gekennzeichnet, dass** die Steuereinrichtung eingerichtet ist, eine Vorgabe einer Arbeitsbreite zu verarbeiten und anhand der Vorgabe der Arbeitsbreite eine Lage der Streuscheibe (20) und/oder eine Drehzahl der Streuscheibe (20) und/oder eine Menge an mittels der Dosiereinrichtung (22) dosiertem Streugut zu verändern.

14. Schleuderstreuer (10) nach einem der vorherigen Ansprüche, **dadurch gekennzeichnet, dass** die Steuereinrichtung eingerichtet ist, eine Menge an Streugut je Flächeneinheit zu verarbeiten und anhand einer Vorgabe der Menge an Streugut je Flächeneinheit eine Lage der Streuscheibe (20) und/oder eine Drehzahl der Streuscheibe (20) und/oder eine Menge an mittels der Dosiereinrichtung (22) dosiertem Streugut zu verändern.

15. Verfahren zum Betreiben eines Schleuderstreuers (10), zumindest umfassend,
- ein Bereitstellen einer Rahmenkonstruktion (12), mit zumindest einem Vorratsbehälter (16) zur Bevorratung des auszubringenden Streuguts,
- ein Bereitstellen von zwei Streuscheiben (20), denen jeweils eine Dosiereinrichtung (22) zugeordnet ist, wobei die Dosiereinrichtungen (22) jeweils eingerichtet sind, dass bevorratete Streugut aus dem Vorratsbehälter (16) durch eine Auslassöffnung (18) in einstellbaren Mengen unter Erzeugung eines jeweiligen Materialstroms jeweils einer Streuscheibe (20) zuzuführen, wobei die Streuscheiben (20) jeweils mittels einer Montagevorrichtung (30) an der Rahmenkonstruktion (12) gelagert sind und deren Lage gegenüber der jeweiligen Auslassöffnung (18) veränderbar ist,
- ein Bereitstellen von zwei, mittels einer Steuereinrichtung steuerbaren und/oder regelbaren Antriebseinrichtungen (28), die jeweils mit einer Streuscheibe (20) wirktechnisch gekoppelt sind und eingerichtet sind, die jeweilige Streuscheibe (20) mit veränderbarer Drehzahl anzutreiben,
- ein Bereitstellen einer Sensoreinrichtung (34), die mit der Steuereinrichtung signalverbunden und/oder signalverbindbar ist und die zur Erfassung eines jeweiligen, durch den Materialstrom auf der jeweiligen Streuscheibe (20) hervorgerufenen Lastmoments eingerichtet ist, wobei die Sensoreinrichtung (34) jeweils mit einer Montagevorrichtung (30) wirktechnisch gekoppelt ist,
und ein derartiges Verändern der jeweiligen Lage der jeweiligen Streuscheibe (20) gegenüber der jeweiligen Auslassöffnung (18) mittels einer, mit der Steuereinrichtung signalverbundenen und/oder signalverbindbaren Verstelleinrichtung (38), die entsprechend mit der Montagevorrichtung (30) wirktechnisch gekoppelt ist, und/oder ein derartiges Verändern der Drehzahl der jeweiligen Streuscheibe (20) und/oder ein derartiges Verändern der Menge an jeweils mittels der Dosiereinrichtung (22) dosiertem Streugut mittels der Steuereinrichtung, dass das jeweilige Lastmoment einen Maximalwert nicht überschreitet.

16. Verfahren nach Anspruch 15, **dadurch gekennzeichnet, dass** dieses mit einem Schleuderstreuer (10) nach zumindest einem der Ansprüche 1 bis 14 ausgeführt wird.

## Claims

1. Centrifugal spreader (10) for spreading spreading material, comprising at least:
- a frame structure (12) with at least one storage container (16) for storing the spreading material to be spread,
- two spreading discs (20), each of which is associated with a dosing device (22), wherein the dosing devices (22) are each configured to feed the stored spreading material from the storage container (16) through an outlet opening (18) in adjustable quantities, producing a respective material flow, to a respective spreading disc (20),
- two drive devices (28), controllable and/or regulatable by means of a control device, each of which is operatively coupled to a spreading disc (20) and is configured to drive the respective spreading disc (20) at a variable rotational speed,
- a sensor device (34), which is signal-connected and/or signal-connectable to the control device and is configured to detect a respective load torque caused by the material flow on the respective spreading disc (20),
wherein the spreading discs (20) are each mounted on the frame structure (12) by means of a mounting apparatus (30), and the sensor device (34) is in each case operatively coupled to a mounting apparatus (30), and
wherein the sensor device (34) is configured to detect a force acting on the mounting apparatus (30) for detecting a respective load torque caused by the material flow on the respective spreading disc (20).

2. Centrifugal spreader (10) according to claim 1, **characterized in that** the spreading discs (20) are mounted on the frame structure (12) by means of the respective mounting apparatus (30) in such a way that a position of the respective spreading disc (20) relative to the outlet opening (18) can be changed by means of the mounting apparatus (30), preferably in such a way that a feed point (32) of the respective material flow on the respective spreading disc (20) can be changed.

3. Centrifugal spreader (10) according to one of claims 1 or 2, **characterized in that** the spreading discs (20) are mounted on the frame structure (12) by means of the mounting apparatus (30) in such a way that changing the position of the respective spreading disc (20) by means of the mounting apparatus (30) causes a change in the respective feed point (32) relative to the respective outlet opening (18) in two directions, in particular causes a change in the X-direction and Y-direction of a coordinate system whose origin is the center of the outlet opening (18).

4. Centrifugal spreader (10) according to one of the preceding claims, **characterized in that** the mounting apparatuses (30) are mounted on the frame structure (12) so as to be pivotable about upright axes (36), wherein a position of the respective spreading disc (20) relative to the respective outlet opening (18) can be changed rotationally.

5. Centrifugal spreader (10) according to one of the preceding claims, **characterized in that**, for changing the position of the spreading discs (20) by means of the respective mounting apparatus (30), each mounting apparatus (30) is operatively coupled to an adjusting device (38) which is signal-connected and/or signal-connectable to the control device, wherein the adjusting device (38) is formed in particular by at least one linear drive and/or a pivot drive, and wherein the adjusting device (38) is configured in particular to be remotely operable.

6. Centrifugal spreader (10) according to one of the preceding claims, **characterized in that** the dosing devices (22) are each configured as outlet openings (18) which are adjustable in size by means of at least one slide (24), wherein the slides (24) of the respective dosing devices (22) are adjustable independently of one another.

7. Centrifugal spreader (10) according to one of the preceding claims, **characterized in that** the detection of the force acting on the mounting apparatus (30) comprises at least
- a force acting on the mounting of the mounting apparatus (30) on the frame structure (12) and/or
- a force acting on a connecting device of the mounting apparatus (30) with an adjusting device (38) of the mounting apparatus (30) and/or
- a force acting on an adjusting device (38) of the mounting apparatus (30).

8. Centrifugal spreader (10) according to one of the preceding claims, **characterized by** a measuring device which is signal-connected and/or signal-connectable to the control device and is configured to detect, indirectly and/or directly, a position of the respective spreading disc (20) relative to the respective outlet opening (18), wherein the control device is configured to calculate the load torque therefrom, taking into account the detected position.

9. Centrifugal spreader (10) according to one of the preceding claims, **characterized in that** a diameter of the spreading disc (20) is stored and/or storable in the control device, and the control device is configured to calculate the load torque on the basis of the diameter of the spreading disc (20).

10. Centrifugal spreader (10) according to one of the preceding claims, **characterized in that** the storage container (16) is coupled to a fill-level detection device which is configured to detect a changing fill level of the storage container (16), wherein the control device is configured to change a position of the spreading disc (20) and/or a rotational speed of the spreading disc (20) and/or a quantity of spreading material dosed by means of the dosing device (22) on the basis of the changing fill level.

11. Centrifugal spreader (10) according to one of the preceding claims, **characterized in that** the control device is configured to change a position of the spreading disc (20) and/or a rotational speed of the spreading disc (20) and/or a quantity of spreading material dosed by means of the dosing device (22) on the basis of the load torque.

12. Centrifugal spreader (10) according to one of the preceding claims, **characterized in that** the control device is configured to change a position of the spreading disc (20) and/or a quantity of spreading material dosed by means of the dosing device (22) on the basis of the rotational speed of the spreading discs (20).

13. Centrifugal spreader (10) according to one of the preceding claims, **characterized in that** the control device is configured to process a working width setting and, on the basis of the working width setting, to change a position of the spreading disc (20) and/or a rotational speed of the spreading disc (20) and/or a quantity of spreading material dosed by means of the dosing device (22).

14. Centrifugal spreader (10) according to one of the preceding claims, **characterized in that** the control device is configured to process a quantity of spreading material per unit area and, on the basis of a setting for the quantity of spreading material per unit area, to change a position of the spreading disc (20) and/or a rotational speed of the spreading disc (20) and/or a quantity of spreading material dosed by means of the dosing device (22).

15. Method for operating a centrifugal spreader (10), comprising at least:
- providing a frame structure (12) with at least one storage container (16) for storing the spreading material to be spread,
- providing two spreading discs (20), each of which is associated with a dosing device (22), wherein the dosing devices (22) are each configured to feed the stored spreading material from the storage container (16) through an outlet opening (18) in adjustable quantities, producing a respective material flow, to a respective spreading disc (20), wherein the spreading discs (20) are each mounted on the frame structure (12) by means of a mounting apparatus (30) and their position relative to the respective outlet opening (18) is changeable,
- providing two drive devices (28), controllable and/or regulatable by means of a control device, each of which is operatively coupled to a spreading disc (20) and is configured to drive the respective spreading disc (20) at a variable rotational speed,
- providing a sensor device (34), which is signal-connected and/or signal-connectable to the control device and is configured to detect a respective load torque caused by the material flow on the respective spreading disc (20), wherein the sensor device (34) is in each case operatively coupled to a mounting apparatus (30),
and changing the respective position of the respective spreading disc (20) relative to the respective outlet opening (18) by means of an adjusting device (38) which is signal-connected and/or signal-connectable to the control device, which is correspondingly operatively coupled to the mounting apparatus (30), and/or changing the rotational speed of the respective spreading disc (20) and/or changing the quantity of spreading material respectively dosed by means of the dosing device (22) by means of the control device, in such a way that the respective load torque does not exceed a maximum value.

16. Method according to claim 15, **characterized in that** said method is carried out with a centrifugal spreader (10) according to at least one of claims 1 to 14.

## Revendications

1. Épandeur centrifuge (10) destiné à épandre un matériau d'épandage, comprenant au moins,
- une structure de châssis (12), avec au moins un réservoir (16) destiné au stockage du matériau d'épandage à épandre,
- deux disques d'épandage (20), auxquels est respectivement associé un dispositif de dosage (22), les dispositifs de dosage (22) étant chacun conçus pour acheminer le matériau d'épandage stocké depuis le réservoir (16), à travers une ouverture de sortie (18), en quantités réglables, vers un disque d'épandage (20) respectif, en générant un flux de matériau respectif,
- deux dispositifs d'entraînement (28), pouvant être commandés et/ou régulés au moyen d'un dispositif de commande, qui sont chacun couplés fonctionnellement à un disque d'épandage (20) et conçus pour entraîner le disque d'épandage (20) respectif à une vitesse de rotation variable,
- un dispositif de détection (34), qui est relié et/ou peut être relié au dispositif de commande pour la transmission de signaux et qui est conçu pour détecter un couple de charge respectif provoqué par le flux de matériau sur le disque d'épandage (20) respectif,
dans lequel les disques d'épandage (20) sont chacun montés sur la structure de châssis (12) au moyen d'un dispositif de montage (30) et le dispositif de détection (34) est couplé fonctionnellement à un dispositif de montage (30) respectif, et dans lequel le dispositif de détection (34) est conçu pour détecter une force agissant sur le dispositif de montage (30) afin de détecter un couple de charge respectif provoqué par le flux de matériau sur le disque d'épandage (20) respectif.

2. Épandeur centrifuge (10) selon la revendication 1, **caractérisé en ce que** les disques d'épandage (20) sont montés sur la structure de châssis (12) au moyen du dispositif de montage (30) respectif de telle sorte qu'une position du disque d'épandage (20) respectif par rapport à l'ouverture de sortie (18) puisse être modifiée par le dispositif de montage (30), de préférence de telle sorte qu'un point d'alimentation (32) du flux de matériau respectif sur le disque d'épandage (20) respectif puisse être modifié.

3. Épandeur centrifuge (10) selon l'une des revendications 1 ou 2, **caractérisé en ce que** les disques d'épandage (20) sont montés sur la structure de châssis (12) au moyen du dispositif de montage (30) de telle sorte qu'une modification de la position du disque d'épandage (20) respectif au moyen du dispositif de montage (30) entraîne une modification du point d'alimentation (32) respectif par rapport à l'ouverture de sortie (18) respective dans deux directions, en particulier une modification dans la direction X et dans la direction Y d'un système de coordonnées dont l'origine est le centre de l'ouverture de sortie (18).

4. Épandeur centrifuge (10) selon l'une des revendications précédentes, **caractérisé en ce que** les dispositifs de montage (30) sont montés sur la structure de châssis (12) de manière à pouvoir pivoter autour d'axes verticaux (36), une position du disque d'épandage (20) respectif par rapport à l'ouverture de sortie (18) respective pouvant être modifiée par rotation.

5. Épandeur centrifuge (10) selon l'une des revendications précédentes, **caractérisé en ce que**, pour modifier la position des disques d'épandage (20) au moyen du dispositif de montage (30) respectif, chaque dispositif de montage (30) est couplé fonctionnellement à un dispositif de réglage (38) relié et/ou pouvant être relié au dispositif de commande pour la transmission de signaux, le dispositif de réglage (38) étant notamment constitué d'au moins un entraînement linéaire et/ou un entraînement de pivotement, et le dispositif de réglage (38) étant notamment conçu pour pouvoir être commandé à distance.

6. Épandeur centrifuge (10) selon l'une des revendications précédentes, **caractérisé en ce que** les dispositifs de dosage (22) sont chacun réalisés sous la forme d'ouvertures de sortie (18) dont la taille est réglable au moyen d'au moins un tiroir (24), les tiroirs (24) des dispositifs de dosage (22) respectifs étant réglables indépendamment les uns des autres.

7. Épandeur centrifuge (10) selon l'une des revendications précédentes, **caractérisé en ce que** la détection de la force agissant sur le dispositif de montage (30) au moins
- comprend une force agissant sur le montage du dispositif de montage (30) sur la structure de châssis (12) et/ou
- comprend une force agissant sur un dispositif de liaison du dispositif de montage (30) à un dispositif de réglage (38) du dispositif de montage (30) et/ou
- comprend une force agissant sur un dispositif de réglage (38) du dispositif de montage (30).

8. Épandeur centrifuge (10) selon l'une des revendications précédentes, **caractérisé par** un dispositif de mesure relié et/ou pouvant être relié au dispositif de commande pour la transmission de signaux, qui est conçu pour détecter indirectement et/ou directement une position du disque d'épandage (20) respectif par rapport à l'ouverture de sortie (18) respective, le dispositif de commande étant conçu pour calculer à partir de celle-ci le couple de charge en tenant compte de la position détectée.

9. Épandeur centrifuge (10) selon l'une des revendications précédentes, **caractérisé en ce qu'**un diamètre du disque d'épandage (20) est mémorisé et/ou peut être mémorisé dans le dispositif de commande et **en ce que** le dispositif de commande est conçu pour calculer le couple de charge sur la base du diamètre du disque d'épandage (20).

10. Épandeur centrifuge (10) selon l'une des revendications précédentes, **caractérisé en ce que** le réservoir (16) est couplé à un dispositif de détection de niveau de remplissage conçu pour détecter un niveau de remplissage variable du réservoir (16), le dispositif de commande étant conçu pour modifier une position du disque d'épandage (20) et/ou une vitesse de rotation du disque d'épandage (20) et/ou une quantité de matériau d'épandage dosée au moyen du dispositif de dosage (22) en fonction du niveau de remplissage variable.

11. Épandeur centrifuge (10) selon l'une des revendications précédentes, **caractérisé en ce que** le dispositif de commande est conçu pour modifier une position du disque d'épandage (20) et/ou une vitesse de rotation du disque d'épandage (20) et/ou une quantité de matériau d'épandage dosée au moyen du dispositif de dosage (22) en fonction du couple de charge.

12. Épandeur centrifuge (10) selon l'une des revendications précédentes, **caractérisé en ce que** le dispositif de commande est conçu pour modifier une position du disque d'épandage (20) et/ou une quantité de matériau d'épandage dosée au moyen du dispositif de dosage (22) en fonction de la vitesse de rotation des disques d'épandage (20).

13. Épandeur centrifuge (10) selon l'une des revendications précédentes, **caractérisé en ce que** le dispositif de commande est conçu pour traiter une consigne de largeur de travail et pour modifier, en fonction de la consigne de largeur de travail, une position du disque d'épandage (20) et/ou une vitesse de rotation du disque d'épandage (20) et/ou une quantité de matériau d'épandage dosée au moyen du dispositif de dosage (22).

14. Épandeur centrifuge (10) selon l'une des revendications précédentes, **caractérisé en ce que** le dispositif de commande est conçu pour traiter une quantité de matériau d'épandage par unité de surface et pour modifier, en fonction d'une consigne de quantité de matériau d'épandage par unité de surface, une position du disque d'épandage (20) et/ou une vitesse de rotation du disque d'épandage (20) et/ou une quantité de matériau d'épandage dosée au moyen du dispositif de dosage (22).

15. Procédé de fonctionnement d'un épandeur centrifuge (10), comprenant au moins
- une fourniture d'une structure de châssis (12), avec au moins un réservoir (16) destiné au stockage du matériau d'épandage à épandre,
- une fourniture de deux disques d'épandage (20), auxquels est respectivement associé un dispositif de dosage (22), les dispositifs de dosage (22) étant chacun conçus pour acheminer le matériau d'épandage stocké depuis le réservoir (16), à travers une ouverture de sortie (18), en quantités réglables, vers un disque d'épandage (20) respectif, en générant un flux de matériau respectif, les disques d'épandage (20) étant chacun montés sur la structure de châssis (12) au moyen d'un dispositif de montage (30) et leur position par rapport à l'ouverture de sortie (18) respective pouvant être modifiée,
- une fourniture de deux dispositifs d'entraînement (28), pouvant être commandés et/ou régulés au moyen d'un dispositif de commande, qui sont chacun couplés fonctionnellement à un disque d'épandage (20) et conçus pour entraîner le disque d'épandage (20) respectif à une vitesse de rotation variable,
- une fourniture d'un dispositif de détection (34), qui est relié et/ou peut être relié au dispositif de commande pour la transmission de signaux et qui est conçu pour détecter un couple de charge respectif provoqué par le flux de matériau sur le disque d'épandage (20) respectif, le dispositif de détection (34) étant couplé fonctionnellement à un dispositif de montage (30) respectif, et une modification de la position respective du disque d'épandage (20) respectif par rapport à l'ouverture de sortie (18) respective au moyen d'un dispositif de réglage (38), relié et/ou pouvant être relié au dispositif de commande pour la transmission de signaux et couplé fonctionnellement au dispositif de montage (30) correspondant, et/ou une modification de la vitesse de rotation du disque d'épandage (20) respectif et/ou une modification de la quantité de matériau d'épandage dosée respectivement au moyen du dispositif de dosage (22), au moyen du dispositif de commande, de telle sorte que le couple de charge respectif ne dépasse pas une valeur maximale.

16. Procédé selon la revendication 15, **caractérisé en ce qu'**il est mis en œuvre avec un épandeur centrifuge (10) selon au moins l'une des revendications 1 à 14.
